# EUROPEAN PATENT APPLICATION

(11) **EP 0 585 208 A2**
(43) Date of publication of application: **02.03.1994**
(21) Application number: 93850163.2
(22) Date of filing: 23.08.1993
(51) Int. Cl.: A23K 1/175, A23K 1/18

(54) **Skatole inhibiting composition**

(30) Priority: 25.08.1992 SE 9202434
(71) Applicant: KEMIRA KEMI AKTIEBOLAG, S-251 09 Helsingborg (SE)
(72) Inventor: Müller, Arthur, S-253 68 Helsingborg (SE); Nilsson, Torsten, S-253 72 Helsingborg (SE); Malmquist, Sven Olov, S-263 00 Höganäs (SE); Ericsson, Claes, S-267 00 Bjuv (SE)
(74) Representative: Inger, Lars Ulf Bosson

(57) **Abstract**

The present invention relates to the use of a substance that produces sulphite or selenite ions at dissolution, as an active compound in the production of a skatole inhibiting composition for monogastric animals.

## Description

### Technical field

The present invention relates to the use of certain compounds for the productionof a skatole inactivating composition intended to be administered to monogastric animals, preferably male pigs.

The object of the present invention is to obtain a possibility of inactivate skatole in the gastrointestinal tract of monogastric animals, in particular male pigs in order to facilitate growing of non-castrated pigs for slaughter.

### Background of the invention

Non-castrated pigs produce a compound named skatole in the gastrointestinal tract. To finish to castrate pigs has a great economical impact but also a animal protective importance. The economical impact of eliminating castration means in particular an improved feed-stuff utilization, i.e. that the consumption is lower in non-castrated pigs per kg growth than in castrated pigs. Furthermore, the meat part of the slaughtered body increases. However, the meat of certain male pigs has a dissentient odour, which at the heating up (cooking) is noticed as a dissentient odour and taste, which smell is ascribed the production of skatole in the large intestine after a microbial decomposition of the amino acid tryptophane. Environmental factors in the pig stable has also a certain but limited effect on the amount of skatole in the meat.

The decomposition of tryptophane is done microbially via indole propionic acid and indole acetic acid to skaltole. Different miro-organisms cooperate in this decomposition.

It is thus evident that a process that inactivates the amount of skatole formed in the large intestine can reduce or completely eliminate the problem of smelling male pigs. At slaughter a reduction is made today for smelling male pigs based on the skatole concentration of fat taken from the neck fat layer. At a concentration of skatole of >0.19 ppm in fat from the neck region a reduction is now made of about SEK 245 per pig (normal slaughtered weight about 80 kg).

Besides the above mentioned effects there is also a positive salubrious aspect at the male pig production as the frequency of pneumonias and breast membrane inflammations is lower in non-castrated pigs compared with castrated pigs. The risk of infections in connection with the castration as such is not unessential either in this regard.

Besides skatole indole and androsterone are formed in the intestine of male pigs in an amount of up to 125 mg per day. All these compounds have a strong and nasty odour, which contribute to the specific pig stable odour. The compounds are added to the stable via urine and faeces. It has also turned out that non-castrated male pigs store skatole in the fat tissue to a greater extent than other animals. Skatole has per se a sexual pheromonic action by telling that there is a male pig present and can thus stimulate the sows to an increased sexual activity, increased oestrus tendency.

Castration of male pigs, which normally takes place at young age, has during the later days been seriously discussed, and there are proposals to prohibit castration.

About 55% of a pig stock is born as male pigs and of these are about 10 to 15% skatole pigs, i.e. that they at slaughter have a skatole concentration exceeding 0.19 ppm. In certain stocks the part of skatole pigs can be considerably higher. As there are about 30 to 35 millions of pigs slaughtered only in the Nordic countries today, the economical loss due to skatole reduction is considerable.

Thus there is a great problem to solve the elimination of particularly skatole in male pigs.

### Description of the present invention

It has now surprisingly been shown possible to reduce the concentration of skatole in male pigs by means of the present invention which is characterized in that one administers a composition containing a compound which at dissolution forms sulphite ions or selenite ions.

In utilizing the present invention it has turned out that the amount of off-sorted pigs, (skatole amount >0.19 ppm) is reduced from 47% to 19%.

Compounds which provide sulphite ions are inter alia sodium hydrogen sulphite (NaHSO₃), potassium hydrogen sulphite (KHSO₃), calcium di(hydrogensulphite) (Ca(HSO₃)₂), sodium sulphite (Na₂SO₃), potassium sulphite (K₂SO₃), calcium sulphite (CaSO₃). Other compounds which can be used are the corresponding selenium compounds, selenium sulphite (Se(SO₃)₂), but also sodium hydrogen selenite (NaHSeO₃), etc. Preferred compounds are sodium hydrogen sulphite and potassium hydrogen sulphite.

The compounds can be added a feed-stuff composition in wet or dry condition, whereby a dry composition is preferred.

The amount of sulphite or selenite is from 0.05 % by weight to 1 % by weight of the total feed-stuff, and depends partly on, if it is administered during the whole growth period or only during the last weeks of the life of the pig to be slaughtered. At long term administration the amount can be lowered to the lower level, while at short term administration a higher level should be administered.

The active compound is suitably added to the feed-stuff in the form of a composition together with other expedients or diluents in order to increase the distribution in the fodder. A such a composition can suitably be composed of an absorbent in the form of a diatomous earth, so called moles, to which up to 150 % of a 5 to 50 % solution of the active compound is absorbed. In such a way a non-dusting , non-tacky product is obtained in granular form having a high concentration of active compound. Moles are sedimented silica algaes and have a particle size of 0.1 to 2.5 mm, normally 0.3 to 0.7 mm. The composition is most readily prepared by spraying a solution of the active compound, such as sodium hydrogen sulphite, in e.g. a Pascal mixer or another suitable mixer. After absorption the product need not to be dried but can be used as it is. In the gastrointestinal tract the sulphite diffunds slowly and provides for a transformation of skatole into another product. The carrier which is chemically inert passes through the gastrointestinal tract.

Other suitable carriers are ground cereals, such as wheat, ryewheat, barley, and oat meal.

Such a composition can be added in an amount of 0.1 to 5 % by weight of the feed-stuff, preferably in an amount 1 % by weight of the feed-stuff. The composition can also be added prior to a further treatment such as pelletizing, or extrusion.

It has also turned out that the production of skatole primarily takes place in the intestine, whereby it is possible to direct the release of active compound to the intestine by providing the composition with a layer which completely or partly prevents release of active compound in the stomach. Such layers can consist of fats or oils or other known coating materials which are not dissolved in the acid pH of the stomach but is dissolved primarily in the higher pH of the intestine.

The effect of the present invention is demonstrated in the following shown tests. In an integrated stock comprising 70 slaughter pig producing sows three groups have been taken out., whereby the groups have been placed in three different pig stables. On of the stables was a test pig stable, while the other two were control pig stables. All pigs were fed a standard feed-stuff for slaughter pigs, whereby in the test stable the feed-stuff furthermore had been provided with 1 % of a composition containing 25 % of sodium hydrogen sulphite, i.e. the feed-stuff contained 0.25 % of sodium hydrogen sulphite.

At slaughter the skatole concentration of fat of the neck region has been analysed with regard to the amount of skatole. The results obtained are evident from Table 1 below.

**Table 1**

| | Number of animals | Amount of skatole (mean) ppm | Removed % |
|---|---|---|---|
| Test stable | 32 | 0.16 | 19 |
| Control stable | 28 | 0.27 | 47 |

As evident from the table above the amount of skatole has been reduced significantly as well as the percentage of removed pigs. It shall be noted that all groups contained young sows, as well, which have a lower production of skatole.

As a further positive factor it has been noted a considerable reduction of odour in the test stable. The reason for this may either be a reduced amount of skatole produced in the faeces and/or a reduced amount of ammonia produced from urine and faeces.

## Claims

1. The use of a substance that produces sulphite or selenite ions at dissolution, as an active compound in the production of a skatole inhibiting composition for monogastric animals.

2. The use according to claim 1, **characterized** in that the active compound is one or more compounds of the group sodium hydrogen sulphite, potassium hydrogen sulphite, calcium di(hydrogensulphite).

3. The use according to claim 1, **characterized** in that the active compound is one or more compounds of the group sodium sulphite, potassium sulphite, calcium sulphite.

4. The use according to claim 1, **characterized** in that the active compound is one or more compounds of the group sodium selenite, potassium selenite, and calcium selenite.

5. The use according to one or more of claims 1-4, **characterized** in that the composition is added to a feed-stuff in an amount of at least 0.05 % by weight calculated on active compound.

6. The use according to one or more of claims 1-5, **characterized** in that the composition consists of active compound absorbed to an absorbent.

7. The use according to claim 6, **characterized** in that the absorbent is diatomous earth.

8. The use according to claim 7, **characterized** in that the amount of active compound is 5 to 100 % by weight of the diatomous earth.

9. The use according to one or more of claims 1-8, **characterized** in that the composition has been coated with a fat and/or oil layer which completely or partly prevents release of the active compound in the stomach.
